# EUROPÄISCHE PATENTANMELDUNG

(11) **EP 1 143 598 A2**
(43) Veröffentlichungstag der Anmeldung: **10.10.2001**
(21) Anmeldenummer: 01100358.9
(22) Anmeldetag: 05.01.2001
(51) Int. Cl.: H02K 5/04, H02K 5/10

(54) **Elektrische Maschine**

(30) Priorität: 06.04.2000 DE 10016827
(71) Anmelder: ROBERT BOSCH GMBH, 70442 Stuttgart (DE)
(72) Erfinder: Siems, Hans-Dieter, 71735 Eberdingen (DE); Lindoerfer, Steffen, 71701 Schwieberdingen (DE); Antl, Oswald, 31174 Ottbergen (DE); Richter, Ingo, 71706 Markgroeningen (DE)

(57) **Zusammenfassung**

Es wird eine elektrische Maschine (20), insbesondere eine Startvorrichtung zum Andrehen von Brennkraftmaschinen, mit einem zumindest zweiteiligen Gehäuse (25) vorgeschlagen, wobei die zumindest zwei Gehäuseteile durch zumindest ein an einer gemeinsamen Gehäusefuge (80) angeordnetes Formschlusselement (95) miteinander verbunden sind.

## Beschreibung

### Stand der Technik

Aus dem Heft "Startanlagen" aus der Reihe Technische Unterrichtung, 1994 von der Robert Bosch GmbH herausgegeben, Seite 12, ist eine elektrische Maschine in Form einer Startvorrichtung zum Andrehen von Brennkraftmaschinen bekannt. Diese Startvorrichtung weist ein mehrteiliges Gehäuse auf. Diese insgesamt drei Gehäuseteile sind in axialer Richtung aufeinander gesetzt und bilden ein gemeinsames, zylindrisches Gehäuse. Das zylindrische Gehäuse besteht aus einem Antriebslagergehäuse, dem in axialer Richtung ein Polgehäuse und an dieses anschließend ein Gehäusedeckel folgt. Im Antriebslagergehäuse sind mehrere Gewindebohrungen eingearbeitet. Der Gehäusedeckel hat mehrere Durchgangslöcher, die mit den Gewindebohrungen fluchten. Die drei Gehäuseteile werden dadurch verbunden, dass durch die Durchgangsbohrungen des Gehäusedeckels Schrauben hindurchgesteckt sind, die bis in Gewindebohrungen des Antriebslagergehäuses reichen. Die festgezogenen Schrauben verspannen das Antriebslagergehäuse mit dem Polgehäuse und dem Gehäusedeckel.

### Vorteile der Erfindung

Mit der erfindungsgemäßen Vorrichtung nach den kennzeichnenden Merkmalen des Anspruchs 1 ist es möglich, ein zumindest zweiteiliges Gehäuse mit deutlich weniger Herstellungsaufwand miteinander zu verbinden. Die Gewindebohrungen im Antriebslagergehäuse und die Durchgangsbohrungen im Gehäusedeckel entfallen. Weiterhin entfallen die verhältnismäßig aufwendigen Schrauben. Weiterhin wird die Montage der Gehäuseteile vereinfacht.

Durch die in den Unteransprüchen aufgeführten Maßnahmen ergeben sich vorteilhafte Weiterbildungen und Verbesserungen der im Anspruch 1 angegebenen Merkmale.

Weisen die zumindest zwei Gehäuseteile jeweils an einem zur Gehäuseführung gerichteten Gehäuseende einen Bund auf, so ist es möglich, diese vom Formschlusselement zu umgreifen und dadurch eine einfache und sichere Verbindung von zumindest zwei Gehäuseteilen zu verwirklichen.

Liegen die Bünde der zumindest zwei Gehäuseteile am Formschlusselement an und weisen geneigte Anlageflächen auf, so ist eine Zentrierung der Gehäuseteile zueinander durch das Formschlusselement möglich. Dies ist insbesondere dann möglich, wenn die Anlageflächen in Richtung zum Formschlusselement zueinander geneigt sind.

Liegen die Bünde in der Gehäusefuge aneinander oder sind diese über das Formschlusselement elektrisch leitfähig verbunden, ist es dadurch in vorteilhafter Weise möglich, einen elektrischen Stromfluss zwischen den zumindest zwei Gehäuseteilen zu ermöglichen. Die Gehäuseteile können dadurch als elektrische Leiter verwendet werden.

Bilden die zu verbindenden Gehäuseteile eine insgesamt ringförmige Gehäusefuge mit ebenso ringförmigen Bünden, so ist es möglich, mittels eines einfachen, ringförmigen Formschlusselements über den ganzen Umfang der ringförmigen Bünde einen Formschluss zu erreichen. Gleichfalls ist es dadurch möglich, eine verbesserte Dichtwirkung an der Gehäusefuge zu erzielen, da durch das Formschlusselement die Fuge fast vollständig abgedeckt wird.

Das ringförmige Formschlusselement ist mit den Gehäuseteilen einfach verspannbar, wenn dies am Umfang eine von der Ringform abweichende dreieckförmige Ausformung aufweist und dann ein von den Gehäuseteilen am weitesten entfernter Bereich der Ausformung an den ringförmigen Bereich des Formschlusselements anlegbar ist. Die in die Ringform des Formschlusselements übergehenden Enden der dreieckförmigen Ausformung werden dadurch aufeinander zubewegt, der Umfang des eigentlichen, ringförmigen Formschlusselements wird dadurch verringert und die Gehäuseteile dadurch miteinander verspannt.

Eine vorteilhafte Weiterbildung ist durch eine trapezförmige Ausformung gegeben. Im Vergleich zur dreieckförmigen Ausformung sind mittels der trapezförmigen Ausformung bei in der Summe gleichen Kräften zum Anlegen der Ausformung höhere Kräfte am Umfang des ringförmigen Formschlusselements erzielbar.

Hat das Formschlusselement im Bundbereich einen U-förmigen Querschnitt, ist nicht nur eine radiale Ausrichtung der Gehäuseteile zueinander möglich, sondern darüber hinaus eine Sicherung der axialen Lage zueinander.

Eine verbesserte Dichtwirkung ist darüber hinaus dadurch möglich, dass in die Gehäusefuqe ein Dichtelement eingebracht ist und dadurch zumindest zwei Gehäuseteile gegeneinander abdichtet sind.

Eine weitere vorteilhafte Ausgestaltung der Dichtung ist dadurch gegeben, dass auf die den Gehäuseteilen zugewandte Seite des Formschlusselements ein Dichtmittel aufgebracht ist.

Mittels dieses Formschlusselements ist ein Weglassen der Schrauben zum Verspannen der Gehäuseteile möglich. Daraus ergibt sich weiterhin die Möglichkeit, den Innenumfang des Stators des Startermotors zu nutzen. Der Zwischenraum zwischen zwei zwischen einem Plus- und einem Minuspol kann dazu verwendet werden, statt einem benachbarten Plus- oder einem benachbarten Minuspol einen sogenannten doppelpoligen Magneten einzubringen. Die Anzahl der einzelnen zu montierenden Magneten wird dadurch um die Hälfte verringert, ebenso die Anzahl der notwendigen Haltemittel für die Magneten.

### Zeichnungen

Die Erfindung wird nachfolgend in Ausführungsbeispielen an Hand der zugehörigen Zeichnungen näher erläutert. Es zeigen:
Fig. 1 eine elektrische Maschine ausgeführt als Startvorrichtung mit einem erfindungsgemäßen Formschlusselement,
Fig. 2 eine Querschnittsdarstellung des Formschlusselements,
Fig. 3 eine ausschnittweise Querschnittsdarstellung der Formschlussverbindung,
Fig. 4 eine Variante des Ausführungsbeispiels nach Fig. 3,
Fig. 5 ein weiteres Ausführungsbeispiel der Formschlussverbindung mit einem Dichtelement,
Fig. 6 eine Querschnittsdarstellung des Formschlusselements,
Fig. 7 eine Darstellung zur Montage des Formschlusselements,
Fig. 8. eine ausschnittweise Querschnittsdarstellung der Formschlussverbindung,
Fig. 9 das im wesentlichen ringförmige Formschlusselement,
Fig. 10 und 11 verschiedene Querschnitte des Formschlusselements,
Fig. 12 eine schematische Darstellung zur Herstellung der Formschlussverbindung,
Fig. 13 eine Variante des Formschlusselements nach Fig. 3,
Fig. 14 einen Querschnitt durch das Startermotorgehäuse.

Identische bzw. gleichwirkende Bauteile sind mit gleichen Bezugszahlen bezeichnet.

### Beschreibung der Ausführungsbeispiele

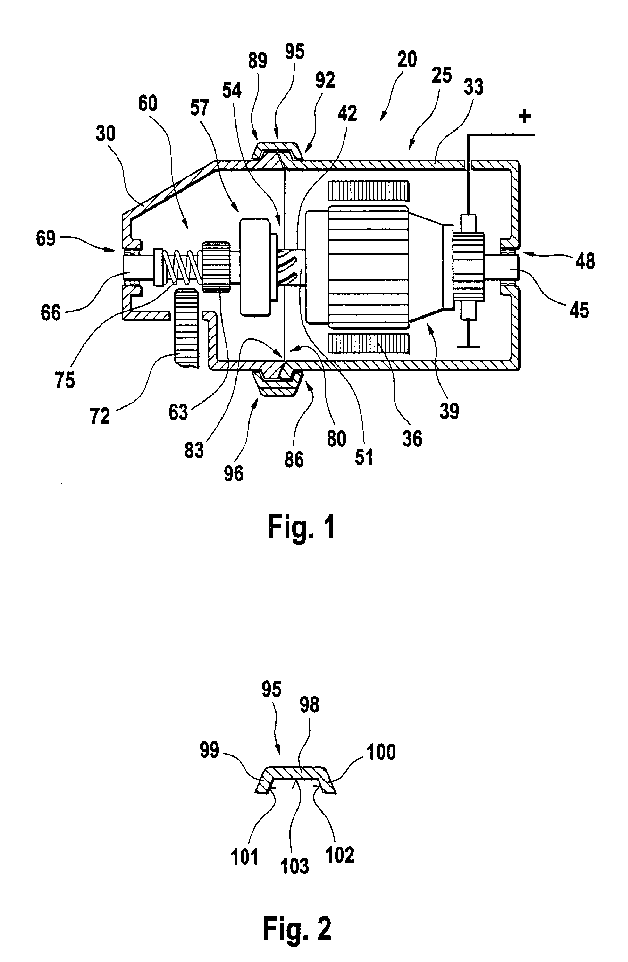

In Fig. 1 ist eine als Startvorrichtung zum Andrehen von Brennkraftmaschinen ausgeführte elektrische Maschine 20 dargestellt. Die elektrische Maschine 20 hat ein zweiteiliges Gehäuse 25, dass aus einem Antriebslagergehäuse 30 und einem Startermotorgehäuse 33 besteht. Im Startermotorgehäuse 33 ist ein Stator 36 und ein Rotor 39 angeordnet. Der Rotor 39 hat eine Rotorwelle 42. Die Rotorwelle 42 hat ein Wellenende 45, das vom Antriebslagergehäuse 30 abgewandt ist. Mit dem Wellenende 45 ist der Rotor 39 mittels eines Lagers 48 im Startermotorgehäuse 33 gelagert. Ein dem Antriebslagergehäuse 30 zugewandter Wellenabschnitt 51 trägt an seinem Außenumfang ein Außensteilgewinde 54. Auf diesem Außensteilgewinde 54 ist ein Freilauf 57 mittels eines Mitnehmerschafts, der an seinem Innenumfang ebenfalls ein entsprechendes Innensteilgewinde trägt, angeordnet.

Der auf der Rotorwelle 42 dreh- und verschiebbare Freilauf 57 ist Teil einer Abtriebswelle 60, die an ihrem dem Antriebslagergehäuse 30 zugewandten Ende ein Ritzel 63 trägt. Ein dem Wellenende 45 abgewandtes Wellenende 66 der Rotorwelle 42 ist im Antriebslagergehäuse 30 mittels eines Lagers 69 gelagert.

Das Ritzel 63 ist bei drehendem Motor 39 über die am Außensteilgewinde 54 wirkende Trägheitskraft der Abtriebswelle 60 in einen Zahnkranz 72 einer insgesamt nicht dargestellten Brennkraftmaschine gegen den Widerstand einer Ausspurfeder 75 einspurbar.

Das Antriebslagergehäuse 30 und das Startermotorgehäuse 33 sind zwei Gehäuseteile, die miteinander verbunden sind. An der Stelle, an der beide Gehäuseteile aneinanderliegen, ist eine gemeinsame Gehäusefuge 80 gebildet. Das Startermotorgehäuse 33 und das Antriebslagergehäuse 30 haben jeweils ein zur Gehäusefuge 80 gerichtetes Gehäuseende 83 bzw. 86. Das Gehäuseende 83 des Antriebslagergehäuses 30 und das Gehäuseende 86 des Startermotorgehäuses 33 haben jeweils einen nach radial außen gerichteten Bund 89 bzw. 92. Beide nach außen gerichteten Bünde 89 bzw. 92 sind von einem Formschlusselement 95 umgriffen. Die beiden zum Formschlusselement 95 gerichteten Bünde 89 und 92 sind Teil einer aus dem Formschlusselement 95 und den Bünden 89 und 92 gebildeten Formschlussverbindung 96. Die beiden Gehäuseteile, Antriebslagergehäuse 30 und Startermotorgehäuse 33 sind dadurch an einer gemeinsamen Gehäusefuge 80 und dem an dieser gemeinsamen Gehäusefuge 80 angeordneten Formschlusselement 95 miteinander verbunden.

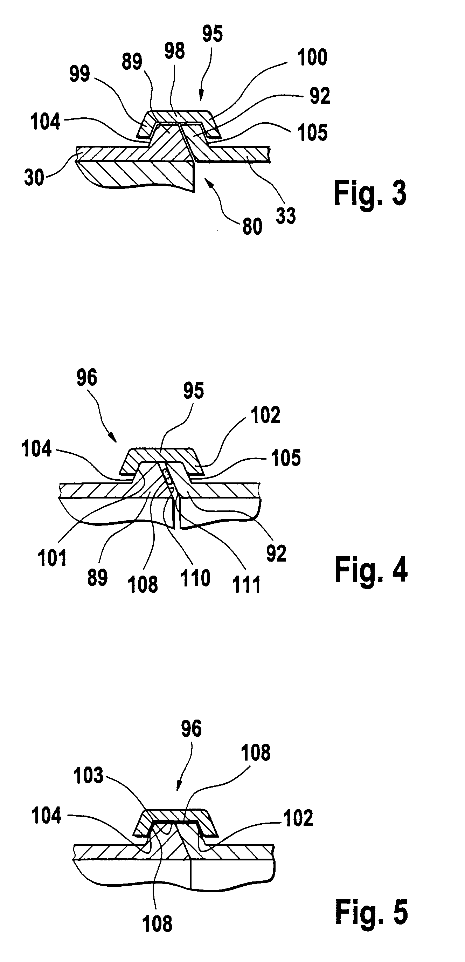

In Fig. 2 ist eine Querschnittsdarstellung des Formschlusselements 95 dargestellt. Das Formschlusselement 95 hat einen insgesamt U-förmigen Querschnitt und weist zwei von einem Basisschenkel 98 ausgehende Seitenschenkel 99 und 100 auf. Die Seitenschenkel 99 und 100 haben einander zugewandte Anlageflächen 101 und 102. Die Anlagefläche 101 liegt an einer der Gehäusefuge 80 abgewandten Bundfläche 104 des Bunds 89 des Antriebslagergehäuses 30 an, siehe auch Fig. 3. Die Anlagefläche 102 liegt an einer ebenfalls der Gehäusefuge 80 abgewandten Bundfläche 105 des Startermotorgehäuses 33 an. Der Basisschenkel 98 hat ebenfalls eine nach radial innen gerichtete Anlagefläche 103. Die Bundflächen 104 und 105 der beiden Bünde 89 und 92 sind in Richtung zum Formschlusselement 95 zueinander geneigt. Das Formschlusselement 95 verbindet die beiden Gehäuseteile Antriebslagergehäuse 30 und Startermotorgehäuse 33 elektrisch leitend. Dadurch ist es möglich, einen Masseanschluss des Startermotors mit dem Startermotorgehäuse 33 zu verbinden und über das Startermotorgehäuse 33, das Formschlusselement 95 und das Antriebslagergehäuse 30 sowie dessen Befestigung fließenden elektrischen Strom an einen nicht dargestellten Motorblock einer Brennkraftmaschine weiterzuleiten.

In Fig. 4 ist eine Variante des Ausführungsbeispiels nach Fig. 3 dargestellt. Dabei ist in der Gehäusefuge 80 ein Dichtelement 108 angeordnet, dass beide Gehäuseteile gegeneinander abdichtet.

Das Dichtmittel 108 kann unterschiedlich ausgeführt sein. Einerseits beispielsweise als sogenannter O-Ring oder als sogenannte Flächendichtung, die zwischen zwei Dichtflächen 110 und 111 und der Gehäusefuge 80 angeordnet ist.

In Fig. 5 ist ein weiteres Ausführungsbeispiel der Formschlussverbindung 96 mit einem Dichtelement 108 dargestellt. In diesem Ausführungsbeispiel sind die im wesentlichen nach radial innen gerichteten Anlageflächen 101, 102 und 103 des Formschlusselements 95 mit dem Dichtelement 108 belegt oder beschichtet. Alternativ ist es auch möglich, das Dichtelement 108 nur an den Anlageflächen 101 und 102 oder nur an der Anlagefläche 103 anzuordnen. Dabei kann das Dichtelement sowohl auf einer der Bundflächen 104 bzw. 105 als auch an der Anlagefläche 101 bzw. 102 angeordnet sein.

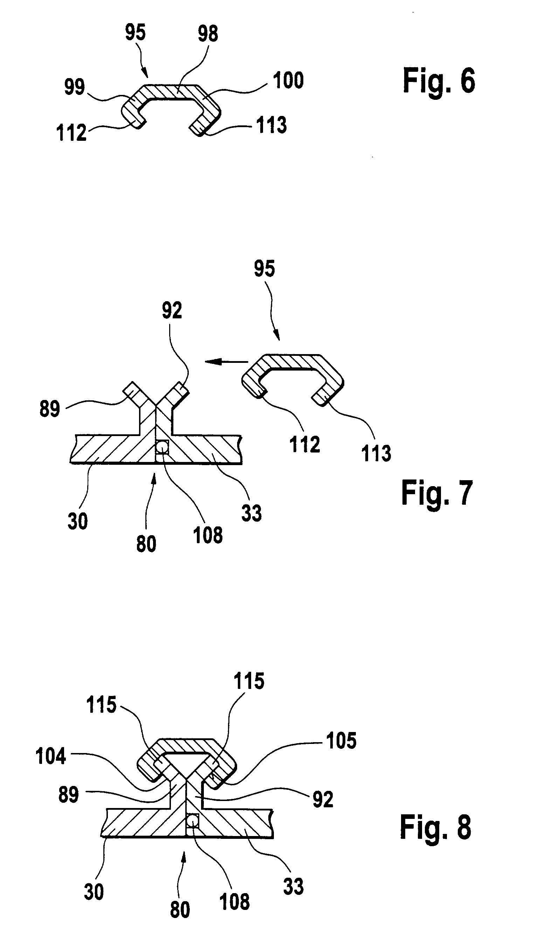

In Fig. 6 ist ein weiteres Ausführungsbeispiel des Formschlusselements 95 dargestellt. Es weist ebenfalls einen im wesentlichen U-förmigen Querschnitt auf und geht von der in Fig. 2 beschriebenen Grundform des Formschlusselements 95 aus. An die Seitenschenkel 99 und 100 schließen sich jeweils Endschenkel 112 und 113 an. Diese beiden Endschenkel 112 und 113 sind zueinander und im wesentlichen nach radial innen gerichtet. Beide Endschenkel 112 und 113 haben unterschiedliche Längen. Der Endschenkel 113 ist länger als der Endschenkel 112. Dadurch ist bei einer insgesamt ringförmigen Gestaltung des Formschlusselements 95 und bei geeigneter Umfangslänge das Formschlusselement 95 nur von einer axialen Seite auf die beiden Bünde 89 und 92 aufschiebbar, siehe auch Fig. 7. Das Formschlusselement 95 wird unter Ausnutzung seiner Elastizität über die beiden Bünde 89 und 92 darüber geschoben.

In Fig. 8 ist die Formschlussverbindung 96 mit dem Formschlusselement 95 aus Fig. 6 bzw. Fig. 7 dargestellt. Die Bünde 89 bzw. 92 des Antriebslagergehäuses 30 und des Startermotorgehäuses 33 haben sich zunächst nach radial außen erstreckende Bünde, deren Bundenden 115 nach radial außen voneinander wegweisen. Die Bundenden 115 beider Bünde 89 und 92 haben voneinander in axialer Richtung wegweisende Anlageflächen 104 und 105, die in Richtung zu den Gehäuseteilen zueinander geneigt sind. Auch in diesem Ausführungsbeispiel ist in der Gehäusefuge 80 zwischen den beiden Gehäuseteilen Antriebslagergehäuse 30 und Startermotorgehäuse 33 ein Dichtelement 108 angeordnet.

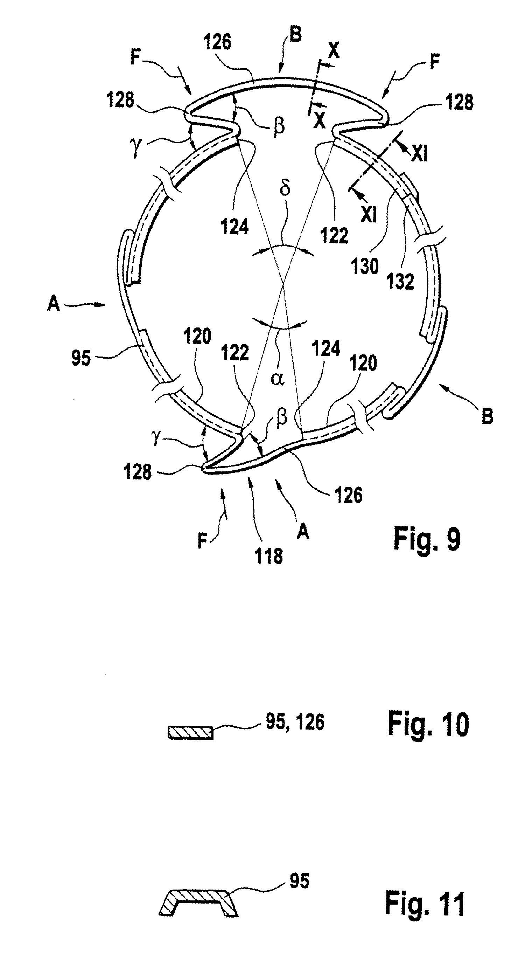

In Fig. 9 ist das im wesentlichen ringförmige Formschlusselement 95 dargestellt. Mit Hilfe dieser Form ist es möglich, zumindest zwei eine ringförmigen Gehäusefuge 80 bildende Gehäuseteile mit ringförmigen Bünden 89 bzw. 92 miteinander formschlüssig zu verbinden. In Fig. 9 sind insgesamt zwei verschiedene Ausführungsbeispiele in jeweils zwei verschiedenen Montagestadien dargestellt. Im unteren Bereich der Fig. 9 ist das Formschlusselement 95 mit einer dreieckförmigen Ausformung 118 und einem ringförmigen Formschlussbereich 120 dargestellt und mit dem Buchstaben A bezeichnet. Dieser ringförmige Formschlussbereich 120 ist, wie in Fig. 3 dargestellt, um die ringförmige Gehäusefuge 80 herumgeführt. Der ringförmige Formschlussbereich 120 hat dabei den in Fig. 11 dargestellten U-förmigen Querschnitt. Der ringförmige Formschussbereich 120 hat durch die Ausformung 118 über einen bestimmten Winkelbereich α eine Unterbrechung des Formschlussbereichs 120. Der Winkelbereich α hat zwei Enden 122 und 124, die mittels zweier einstückig mit den Enden 122 und 124 verbundenen Streifenbereichen 126 und 128 verbunden sind. Die beiden Streifenbereiche 126 und 128 schließen einen Winkel β ein, der zum Ringinneren des Formschlusselements 95 hin geöffnet ist. Der Streifenbereich 128 und der ringförmige Formschlussbereich 120 schließen einen Winkel γ ein. Eine besonders günstige Formgebung des Formschlusselements 95 ist dann gegeben, wenn der Winkel γ kleiner als 90° ist. Das Formschlusselement 95 verspannt dann die zwei Bünde 89 und 92, wenn die Streifenbereiche 126 und 128 an den Außenumfang des ringförmigen Formschlussbereichs 120 angelegt sind. Dazu wird auf die Außenseite des Streifenbereichs 126 eine Kraft F aufgebracht, so dass sich mittels einer Art Kniehebelwirkung die beiden Enden 122 und 124 annähern und dabei der Streifenbereich 128 zunächst auf der ringförmigen Außenseite des Formschlussbereichs 120 anliegt und der Streifenbereich 126 auf dem dann anliegenden Streifenbereich 128 zu liegen kommt, siehe auch A linke Seite der Fig. 9, mit dem fertigmontierten Formschlusselement 95.

Im Ausführungsbeispiel A wird das Verspannen der Gehäuseteile Antriebslagergehäuse 30 und Startermotorgehäuse 33 dadurch erreicht, dass die zwei Streifenbereiche 126 und 128 der Ausformung 118 an den ringförmigen Bereich des Formschlusselements 95 anlegbar ist. Eine weitere Variante B ist in Fig. 9 oben dargestellt. Hier bilden die zwei Streifenbereiche 128 und ein Streifenbereich 126 eine trapezförmige Ausformung 118. Die Verspannung der zwei Gehäuseteile wird in ganz ähnlicher Weise wie im Ausführungsbeispiel A nach Fig. 9 erreicht. Dabei wird auf die nach radial außen gerichtete Außenseite des Streifenbereichs 126 im Bereich der Streifenbereiche 128 jeweils eine Kraft F aufgebracht und dadurch die beiden Enden 122 und 124 angenähert und schließlich die Gehäuseteile durch das Formschlusselement 95 verspannt. Die Endlage der ehemals trapezförmigen Ausformung 118 ist in Fig. 9, rechts unten, Variante B, dargestellt.

Um die Streifenbereiche 126 und 128 der beiden Ausführungsbeispiele A und B mit möglichst geringem Widerstand verbiegen zu können bzw. an die Außenseite des Formschlussbereichs 120 anlegen zu können, hat das Formschlusselement 95 im Bereich der Ausformungen 118 einen rechteckförmigen Querschnitt, siehe auch Fig. 10. Ist das Formschlusselement 95 wie in Fig. 9 dargestellt, aus einem einzigen Streifen hergestellt, so sind zur Herstellung des im wesentlichen ringförmigen Formschlusselements 95 zwei Enden 130 und 133 miteinander zu verbinden. Dabei können die beiden Enden 130 und 132 überlappend miteinander verschweißt werden oder beispielsweise miteinander formschlüssig verkrallt sein.

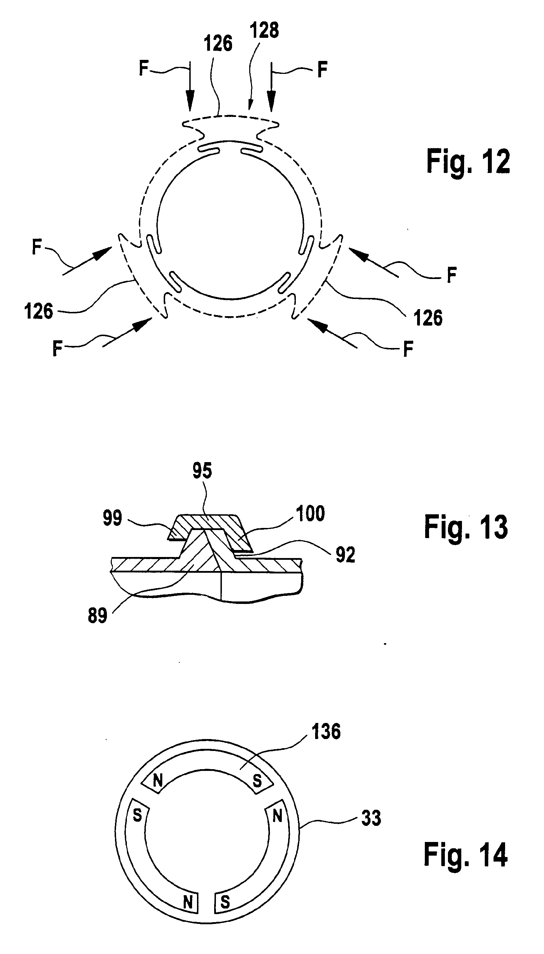

In Fig. 12 ist schematisch die Herstellung der Formschlussverbindung 96 durch Verformen der Ausformungen 118 am Formschlusselement 95 dargestellt. Durch Aufbringen der Kräfte F auf die Streifenbereiche 126 werden einerseits die Streifenbereiche 126 und 128 an den Außenumfang des Formschlussbereichs 120 angelegt und andererseits der Umfang des Formschlussbereichs 120 mit dem Umformen der Ausformungen 118 verkleinert und dadurch die Gehäuseteile durch das Formschlusselement 95 miteinander verspannt. Das Formschlusselement 95 kann mehrere Ausformungen 118 aufweisen.

In Fig. 13 ist eine Variante des Formschlusselements 95 nach Fig. 3 dargestellt. Das Ausführungsbeispiel in Fig. 11 hat wie das Ausführungsbeispiel des Formschlusselements 95 aus Fig. 6 unterschiedlich lange Seitenschenkel 99 und 100. Mit diesem Ausführungsbeispiel ist es ebenso wie mit dem Ausführungsbeispiel aus Fig. 6 möglich, das ringförmige Formschlusselement 95 so zu gestalten, dass dieses nur von einer axialen Richtung auf die Bünde 89 bzw. 92 aufschiebbar ist.

Das Formschlusselement 95 besteht idealerweise aus einem hochfesten, korrosionsbeständigen Material.

In Fig. 14 ist gezeigt, wie der durch die nunmehr fehlenden Schrauben zur Verspannung der einzelnen Gehäuseteile frei gewordene Raum innerhalb des Startermotorgehäuses 33 genutzt werden kann. Der Raum im Startermotorgehäuse 33 kann dazu genutzt werden, drei sogenannte Doppelmagnete 136 statt sechs einzelner Pole zu verwenden.

## Patentansprüche

1. Elektrische Maschine, insbesondere Startvorrichtung zum Andrehen von Brennkraftmaschinen, mit einem zumindest zweiteiligen Gehäuse (25), **dadurch gekennzeichnet, dass** zumindest zwei Gehäuseteile durch zumindest ein an einer gemeinsamen Gehäusefuge (80) angeordnetes Formschlusselement (95) miteinander verbunden sind.

2. Elektrische Maschine nach Anspruch 1, **dadurch gekennzeichnet, dass** die zumindest zwei Gehäuseteile jeweils an einem zur Gehäusefuge (80) gerichteten Gehäuseende (83) einen zum Formschlusselement (95) gerichteten Bund (89, 92) aufweisen, der Teil einer aus dem Formschlusselement (95) und den Bünden (89, 92) gebildeten Formschlussverbindung (96) ist.

3. Elektrische Maschine nach Anspruch 2, **dadurch gekennzeichnet, dass** das Formschlusselement (95) die nach außen gerichteten Bünde (89, 92) umgreift.

4. Elektrische Maschine nach Anspruch 2 oder 3, **dadurch gekennzeichnet, dass** die Bünde (89, 92) am Formschlusselement (95) anliegende und geneigte Bundflächen (104, 105) haben.

5. Elektrische Maschine nach Anspruch 4, **dadurch gekennzeichnet, dass** die Bünde (89, 92) in Richtung zum Formschlusselement (95) zueinander geneigte Bundflächen (104, 105) aufweisen.

6. Elektrische Maschine nach Anspruch 4, **dadurch gekennzeichnet, dass** die Bünde (89, 92) zu den Gehäuseteilen zueinander geneigte Bundflächen (104, 105) aufweisen.

7. Elektrische Maschine nach einem der vorhergehenden Ansprüche, **dadurch gekennzeichnet, dass** das Formschlusselement (95) im wesentlichen ringförmig ist und zumindest zwei, eine ringförmige Gehäusefuge (80) bildende Gehäuseteile mit ringförmigen Bünden (89, 92) miteinander forrmschlüssig verbindet.

8. Elektrische Maschine nach Anspruch 7, **dadurch gekennzeichnet, dass** das im wesentlichen ringförmige Formschlusselement (95) zumindest eine dreieckförmige Ausformung (118) aufweist, wobei ein von den Gehäuseteilen am weitesten entfernter Streifenbereiche (126, 128) der Ausformung (118) an einen ringförmigen Bereich des Formschlusselements (95) anlegbar ist und dadurch die Gehäuseteile miteinander verspannbar sind.

9. Elektrische Maschine nach Anspruch 7, **dadurch gekennzeichnet, dass** das im wesentlichen ringförmige Formschlusselement (95) zumindest eine trapezförmige Ausformung (118) aufweist, wobei von den Gehäuseteilen am weitesten entfernte Streifenbereiche (126, 128) der Ausformung (118) an den ringförmigen Bereich des Formschlusselements (95) anlegbar und dadurch die Gehäuseteile miteinander zentriert verspannbar sind.

10. Elektrische Maschine nach Anspruch 8 oder 9, **dadurch gekennzeichnet, dass** das Formschlusselement (95) teilweise einen U-förmigen Querschnitt hat, und damit die Bünde (89, 92) umgreift.

11. Elektrische Maschine nach Anspruch 10, **dadurch gekennzeichnet, dass** das Formschlusselement (95) im Bereich der Ausformungen (118) einen rechteckförmigen Querschnitt hat.

12. Elektrische Maschine nach einem der Ansprüche 8 bis 11, **dadurch gekennzeichnet, dass** das Formschlusselement (95) mindestens eine Ausformung (118) aufweist.

13. Elektrische Maschine nach einem der vorhergehenden Ansprüche, **dadurch gekennzeichnet, dass** das Formschlusselement die Gehäuseteile elektrisch leitend verbindet.

14. Elektrische Maschine nach einem der vorhergehenden Ansprüche, **dadurch gekennzeichnet, dass** in der Gehäusefuge (80) ein Dichtelement (108) angeordnet ist, das je zwei Gehäuseteile gegeneinander abdichtet.

15. Elektrische Maschine nach einem der vorhergehenden Ansprüche, **dadurch gekennzeichnet, dass** das Startermotorgehäuse (33) und das Antriebslagergehäuse (30) von den zumindest zwei Gehäuseteilen umfasst sind.

16. Elektrische Maschine nach einem der vorhergehenden Ansprüche, **dadurch gekennzeichnet, dass** der Stator (36) zumindest einen doppelpoligen Magneten (130) aufweist.
